# EUROPEAN PATENT SPECIFICATION

(11) **EP 2 457 311 B1**
(45) Date of publication and mention of the grant of the patent: **05.10.2016**
(21) Application number: 10737856.4
(22) Date of filing: 21.07.2010
(51) Int. Cl.: H02K 13/02, H02K 11/00

(54) **ELECTRIC MACHINE COOLED WITH AN INFLAMMABLE COOLING FLUID**
MIT EINER ENTFLAMMBAREN KÜHLFLÜSSIGKEIT GEKÜHLTE ELEKTROMASCHINE
MACHINE ÉLECTRIQUE REFROIDIE PAR FLUIDE DE REFROIDISSEMENT INFLAMMABLE

(30) Priority: 23.07.2009 IT MI20091308
(43) Date of publication of application: 30.05.2012
(73) Proprietor: Ansaldo Energia S.p.A., Genova (IT)
(72) Inventor: GARELLO, Roberto, I-16132 Genova (IT)
(74) Representative: Eccetto, Mauro
(86) International application number: PCT/EP2010/060591
(87) International publication number: WO 2011/009901

(56) References cited:
- JP-A- 4 071 349
- JP-A- 59 108 933
- US-A- 5 382 856
- US-B1- 6 236 128

## Description

### TECHNICAL FIELD

This invention relates to an electric machine cooled with an inflammable cooling fluid, in particular hydrogen.

### BACKGROUND ART

With particular reference to the described embodiment, the electric machine is an electric generator, which is actuated by a turbine. The electric machine comprises a rotor, rotatable about a first axis, and a stator casing arranged, in part, about the rotor and suitable to define a space occupied by the inflammable cooling fluid. The rotor comprises a shaft; at least one excitation electric winding arranged in the space; a connecting circuit extending, at least in part, into the shaft in an electrically insulated manner from the shaft itself, and suitable to connect the excitation electric winding with the outside of the stator casing. The shaft comprises a plurality of holes suitable to define a housing for the connecting circuit and at least a possible exit path for the inflammable cooling fluid. The connection circuit is of the type described in the application US 5,382,856 and comprises at least one axial bar arranged within the rotor, a first radial pin suitable to connect the bar to the excitation winding; a second pin; and a sliding ring for sliding brushes connected to the second pin. In essence, the connection circuit puts the space occupied by the inflammable cooling fluid into communication with an outer part arranged in proximity of the contact zone between the ring and the sliding brushes, and, as it is known, outside the stator casing. A possible leakage of inflammable cooling fluid in proximity of this ring would be very dangerous because sparks generated by the contact between the sliding brushers and the ring could inflame the cooling fluid.

For this purpose, it is necessary to ensure tightness between the connection circuit and to have the possibility of checking sealing tightness at the same time.

For this purpose, patent US 5,382,856 discloses the use of two gaskets arranged in series between the shaft and the connection circuit along any possible exit path of the inflammable cooling liquid, and a conduit arranged within the connection circuit to selectively check the sealing, e.g. by injecting air and checking how long it takes to determine a determined drop of pressure determined preliminarly according to acceptability criteria.

The detection conduit has the function of detecting whether the gaskets were correctly assembled and ensuring effective tightness. If this does not occur, the gaskets and, at least in part, the connection circuit must be disassembled and reassembled until the tests provide a satisfactory result in terms of safety.

If a leak occurs while the electric generator is running, the only solution is to stop the electric generator and intervene by replacing possibly damaged components. This implies a rather long, non-scheduled machine stop, which must be compensated by energy production from another source.

### DISCLOSURE OF INVENTION

It is the object of the present invention to make an electric machine cooled with an inflammable cooling fluid capable of reducing non-scheduled machine stops and maintaining the maximum safety levels at the same time.

According to the present invention, an electric machine cooled with an inflammable cooling fluid is made; the electric machine comprising a rotor, rotatable about an axis, and stator casing arranged, in part, about the rotor and suitable to define a space occupied by the cooling fluid; the rotor comprising a shaft; at least an excitation electric winding arranged in the space; a connecting circuit extending, at least in part, within the shaft in an electrically insulated manner from the shaft and suitable to connect the excitation electric winding with the outside of the stator casing; said shaft comprising a plurality of holes suitable to define a housing for the connecting circuit and at least a possible exit path for the cooling fluid; and a first, a second, and a third sealing assemblies arranged in series along said path between the connecting circuit and the shaft; and a first and a second conduits suitable to connect with the outside respectively a path zone comprised between the second and the third sealing assemblies and a path zone comprised between the first and the second sealing assemblies.

By virtue of the present invention, the electric machine can be maintained completely safe operating also in case of decaying of the tightness of either the first, the second or the third sealing assembly. Furthermore, the first and the second conduit allow to determine which of either the first, the second or the third sealing assemblies has shown signs of failing tightness.

The electric machine made according to the invention therefore is suitable to allow a considerable reduction of non-scheduled machine stops and is capable of maintaining high safety levels by operating with at least two sealing assemblies arranged in series, also in case of failure of one among the first, the second and the third sealing assembly.

According to a preferred embodiment of the present invention, each of the first, second and third sealing assemblies comprises at least a gasket and a respective compression element for compressing the gasket against the shaft.

In this manner, each gasket of a respective sealing assembly is checked by a respective compression element, which determines a desired pre-compression of the gasket itself.

### BRIEF DESCRIPTION OF THE DRAWINGS

Further features and advantages of the present invention will be apparent from the following description of a non-limitative example of embodiment thereof, with reference to the figures in the appended drawings, in which:
- figure 1 is a longitudinal section view, with parts removed for clarity, of an electric machine made according to the present invention;
- figure 2 is a section view, on magnified scale and with parts removed for clarity, of a detail of the electric machine in figure 1; and
- figure 3 is a section view, on enlarged scale and with parts removed for clarity, of a further detail of the electric machine in figure 1.

### BEST MODE FOR CARRYING OUT THE INVENTION

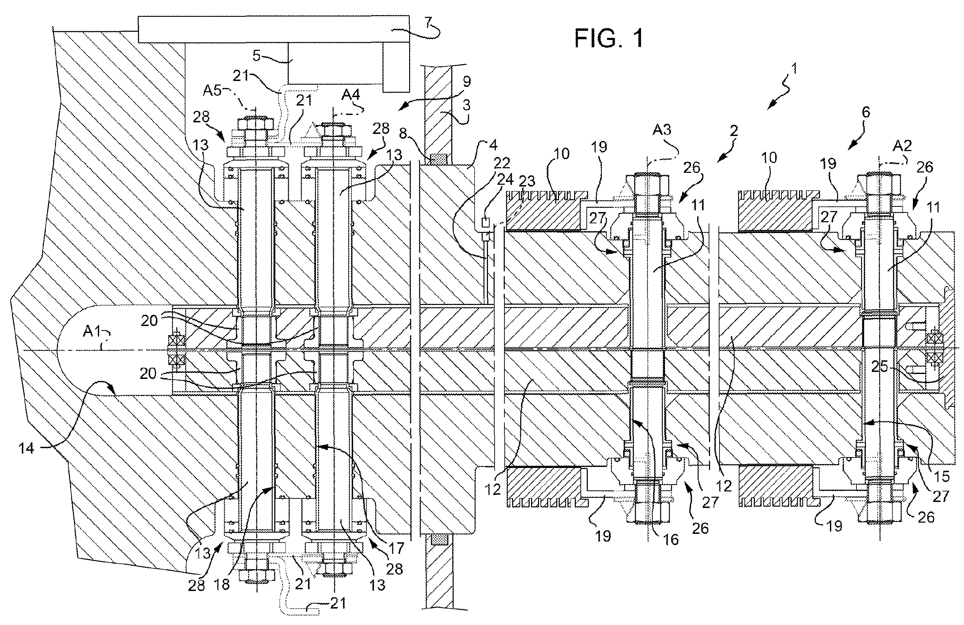

With reference to figure 1, numeral 1 indicates as a whole an electric machine cooled with a high-performing and, at the same time, very inflammable cooling fluid; hydrogen in the case in point. In the case in point, the electric machine 1 is an electric generator associated to a turbine and used for the production of electricity. The generator 1 comprises a stator (not shown in the appended figures), a rotor 2 rotatable about the stator (not shown) about an axis A1 and a stator casing 3, which encloses the stator (not shown) and in part the rotor 2. Hydrogen circulates in the stator casing 3 with the purpose of cooling the active parts of the machine 1. The rotor 2 comprises a shaft 4 which extends in part into the stator casing 3 and, in part, outside the stator casing 3, an excitation electric winding 5, which extends into the stator casing 3, a connection circuit 6, which extends at least in part into the shaft 4 to connect the excitation electric windings 5 to sliding supply brushes (not shown in the appended figures).

The rotor 2 further comprises a protective hood 7, diagrammatically shown at a header of the rotor 2 itself. The excitation electric winding 5 extends in the cavities (not shown) of the rotor 2 and within the protective hood 7.

The rotor 2 and the stator casing 3 are separated by sealing elements 8 (diagrammatically shown in figure 1) and define a closed space 9 containing hydrogen, which is used as cooling means to prevent the overheating of the active parts of the electric machine 1, while the sealing elements 8 have the function of preventing the leakage of hydrogen 9 from the closed space 9.

In the case in point shown in figure 1, the connection circuit 6 comprises two rings 10 arranged outside the stator casing 3 and mounted on the shaft 4; two pins 11 arranged outside the stator casing 3 and in part inside the shaft 4; two axial bars 12 arranged inside the shaft 4; and four pins 13 arranged inside the stator casing 3 and, in part, inside the shaft 4.

The connecting circuit 6 is supported by the shaft 4 and is electrically isolated from the shaft 4. More in detail, the shaft 4 has an axial hole 14 of axis A1 and is suitable to house the bars 12; two diametric holes 15 and 16 with axes A2 and A3, respectively, and suitable to house two pins 11; and two diametric holes 17 and 18 of axes A4 and A5, respectively, and suitable to house the four pins 13.

Each bar 12 has holes aligned with diametric holes 15, 16, 17, and 18.

Each pin 11 extends through the shaft 4 in diametrical direction and through the bars 12 and protrudes from an end opposite to the shaft 4 to be connected to a respective ring 10 by means of terminals 19. Each pin 11, while having an extension larger than the shaft 4 is electrically connected to only one of the two bars 12 and is electrically insulated from the other of the two bars 12.

Each pin 13 extends from the axis A1 to the outside of the shaft 4 and is connected to only one of the bars 12 by means of a bushing 20 and to the electric winding 5 by means of two terminals 21. The bushing 20 is made of conductive material and is an integral part of the connection circuit 6.

In fact, each shaft 10 is connected to a pair of pins 13, which are connected in parallel to an end of the excitation electric winding 5.

The shaft 4 further has a conduit 22, which connects the axial hole 14 to the outside of the shaft 4. In the case in point, the conduit 22 is a radial hole, which is arranged between the pins 11 and the pins 13 and has the end arranged at the outer surface of the shaft 4 threaded so as to be able to close the conduit 22 with a plug 23. In use, the conduit 22 is normally open and the electric machine 1 comprises a control device including a sensor 24 suitable to detect the presence of hydrogen in proximity of the conduit 22.

The rotor 2 comprises a flange 25 mounted at the end of the shaft 4 to hermetically close the axial hole 14, and first, second and third sealing assemblies 26, 27 and 28 for obtaining tightness between the pins 11 and 13, on one side, and the shaft 4, on the other side. In essence, the space 9 occupied by the hydrogen is separated from the outside by three sealing assemblies 26, 27, and 28 arranged in series for each possible exit path of the cooling fluid along the connection circuit 6. In the case in point, each pin 11 is associated to two first sealing assemblies 26 and two sealing assemblies 27; and each pin 13 is associated to a third sealing assembly 28. Each end of the pin 11 is associated to a first and to a second sealing assembly 26 and 27.

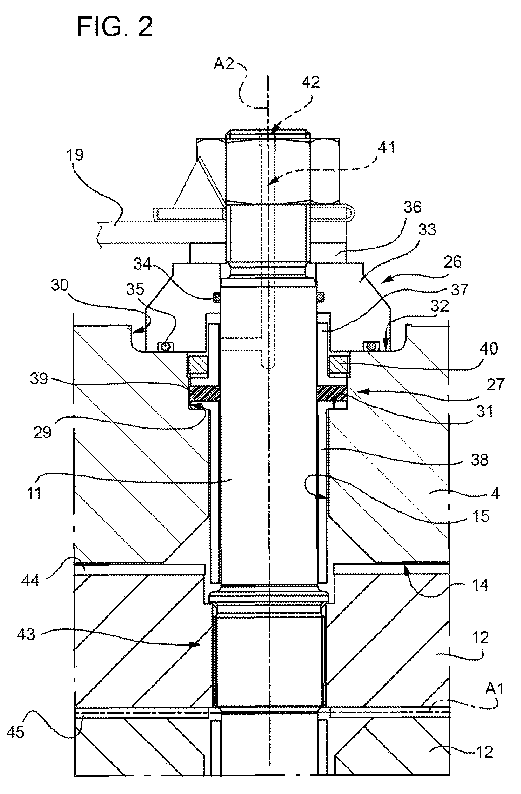

Hole 15 is shown by way of example in figure 2, being understood that the following description also applies to hole 16. Hole 15 at the outer surface of the shaft 4 flares in sequence into two holes 29 and 30 and forms two respective shoulders 31 and 32. The holes 29 and 30 define respective zones partially occupied respectively, and at least in part, by a second sealing assembly 27 and by a first sealing assembly 26.

The first sealing assembly 26 comprises a flange 33 made of insulating material; the two gaskets 34 and 35; and a nut 36 suitable to abuttingly secure the flange 33 against the shoulder 32. The flange 33 has an annular shape, is fitted on the pin 11 and has a cylindrical face in which an annular groove is obtained in which gasket 34 is housed and a annular face provided with a groove for housing the gasket 35. In the case in point, gaskets 34 and 35 are O-rings and are arranged in contact with pin 11 and shaft 4 at the shoulder 32, respectively. The nut 36 is fastened to a threaded end of the pin 11, and compresses the flange 33 and the annular gasket 35 against the shoulder 32.

The second sealing assembly 27 comprises two flanged pipe couplings 37 and 38; one gasket 39; and one threaded ring nut 40. The threaded pipe couplings 37 and 38 are made of insulating material, are arranged in sequence along the pin 11 and about the pin 11 to isolate the pin 11 from the shaft 4, and have two respective end flanges within the hole 29. The gasket 39 is arranged between the two mentioned flanges of the pipe couplings 37 and 38 and between the shaft 4 and the pin 11 at the hole 29. The ring nut 40 is screwed onto the shaft 9 at the hole 29 also partially threaded and rests on the flange of the pipe coupling 37 and compresses the gasket 39 and the flange of the pipe coupling 38 against the shoulder 31 and, by effect of the expansion of the gasket 39, compresses the gasket 39 against the shaft 4 and the pin 11.

Furthermore, each pin 11 comprises at the opposite ends two channels 41, each of which extends between a side surface of the pin 11 arranged between the sealing assembly 26 and the sealing assembly 27 and an end surface of the pin 11 at which the channel 41 is obstructed by a plug 42 so as to connect a zone of the path comprised between the first and the second sealing assemblies 26 and 27 to the outside.

For the sake of description completeness, each pin 11 is coupled to one of the two bars 12 by means of a coupling 43 which comprises a threaded coupling and an abutting stop. Each pin 11 is further insulated from the other by means of the two bars 12, which are insulated from the shaft 4 by means of an insulating pipe 44 and are insulated from one another by means of an insulating panel 45.

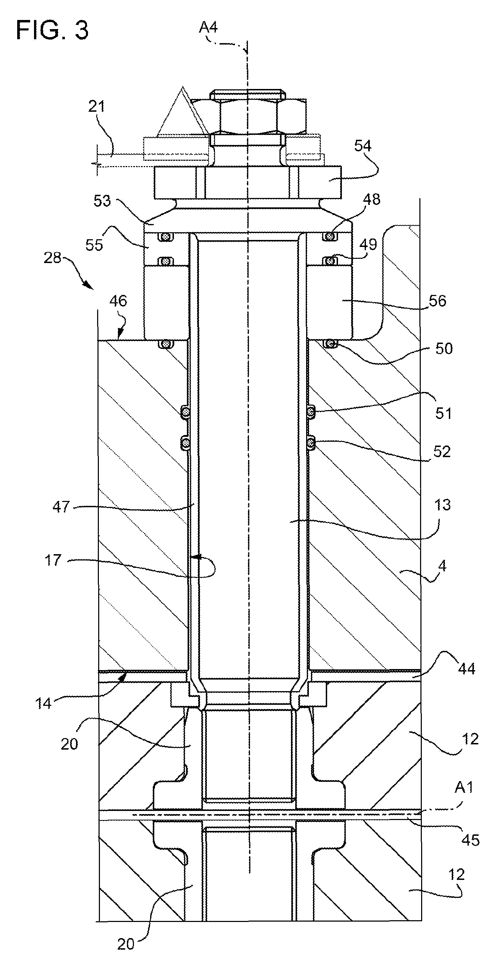

Hole 17 is shown by way of example in figure 3, being understood that the following description also applies to hole 18. In fact, as better shown in figure 1, both holes 17 and 18 at the outer surface of the shaft 4 flare to form a space characterized by a shoulder 46. With reference to figure 3, each pin 17 is fixed to a bar 12 and insulated from the shaft 4 by means of a coupling pipe 47 made of insulating material. Each third sealing assembly 28 is arranged in part inside the hole 17 (18, respectively) and in part at the shoulder 46. In the case in point, the third sealing assembly 28 comprises five gaskets 48, 49, 50, 51, and 52, a flange 53, a nut 54, a ring 55 and a bushing 56 made of insulating material.

The bushing 56 is fitted on the pin 13 and rests on the shoulder 46; the ring 55 is fitted on the pin 13 and rests on the bushing 56; the flange 53 is integral with the pin 13 and rests on the ring 55. Also the nut 54 is integral with the pin 13 to be able to screw the pin 13 into the bushing 20 and, thus, to allow the flange 53 to compress the ring 55 and the bushing 56 against the shoulder 46.

The ring 55 has two annular grooves occupied respectively by the gaskets 48 and 49 and arranged in contact with the flange 53 and the bushing 56, respectively. A further annular groove is obtained in the shaft 4 along the shoulder 46 and is occupied by the gasket 50, which is arranged in contact with the bushing 56.

Two annular grooves extend in the shaft 4 at the hole 17 (18 respectively) and are occupied by the gaskets 51 and 52, respectively.

In the case in point, the gaskets 48, 49, 50, 51, and 52 are O-rings.

With reference to figure 1, each pin 11 is associated to two first sealing assemblies 26 and two second sealing assemblies 27; while each pin 13 is associated to a third sealing assembly 28. As a whole, the connection circuit 6 is associated to four first sealing assemblies 26, four second sealing assemblies 27 and four third sealing assemblies 28. The four holes 15, 16, 17 and 18 define eight mouths along the outer surface of the shaft 4 and, consequently, the hydrogen has the possibility of exiting through various paths which connect the compartment 9 to the outside of the electric machine 1. The arrangement of the sealing assemblies 26, 27, and 28 contemplates that along any possible exit path of the hydrogen defined by the holes 14, 15, 16, 17, and 18 in the shaft 4 and determined by the shape of the connection circuit 6 within the shaft 4, there are first, second and third sealing assemblies 26, 27, and 28 arranged in series. Furthermore, between the second sealing assemblies 27, on one hand, and the third sealing assemblies 28, on the other hand, the conduit 22 allows to test the tightness of the second and third sealing assemblies 27 and 28, while the conduits 41 (figure 2) allow to check the tightness of a first and a second adjacent sealing assembly 26 and 27.

In use, the pipe 22 is left open and the sensor 24 can detect a possible leakage of hydrogen from the conduit 22. If this occurs, the conduit 22 is closed by the plug 23, the first and the second sealing assemblies 26 and 27 are tested and, if found suitable, the electric machine 1 can restart after a short interruption. The necessary maintenance of sealing assemblies 28 can be carried out when a scheduled machine stop is planned and the plug 23 will be removed again.

The present invention thus allows to reduce non-scheduled machine stop time and consequently to increase the productivity of the electric machine, ensuring the best levels of safety.

Furthermore, the electric machine 1 made according to the present invention has the advantage of allowing to determine which of either the first, or the second, or third sealing assemblies 26, 27, and 28 has lost its sealing capacity. When the sensor 24 detects the presence of inflammable cooling liquid in proximity of the conduit 24, it means that at least one of the three sealing assemblies 28 is no longer capable of maintaining tightness.

If an excessively rapid pressure drop is detected when a fluid is injected into a channel 41, it means that either first or second sealing assemblies 26 and 27 arranged in proximity of the conduit 41 is no longer tight. If this event occurs in absence of leakage of cooling fluid and consequently in condition of full efficiency of the third sealing assemblies 28, a pressure drop test through the conduit 22 allows to establish which of either the first or the second sealing assembly 26 and 27 is no longer tight. In this manner, it is possible to diagnose the fault with grater rapidity and accuracy and to intervene in a targeted manner, further reducing the machine stop times.

Furthermore, it is apparent that this invention also covers embodiments not described in the detailed description and equivalent embodiments which are included in the scope of protection of the appended claims.

## Claims

1. Electric machine cooled with an inflammable cooling fluid; the electric machine (1) comprising a rotor (2) rotatable about an axis (A1) and stator casing (3) arranged, in part, about the rotor (2) and suitable to define a space (9) occupied by the cooling fluid; the rotor (2) comprising a shaft (4); at least an excitation electric windings (5) arranged in the space (9); a connecting circuit (6) extending, at least in part, into the shaft (4) in an electrically insulated manner from the shaft (4) and suitable to connect the excitation electric winding (5) with the outside of the stator casing (3); said shaft (4) comprising a plurality of holes (14, 15, 16, 17, 18) suitable to define a housing for the connecting circuit (6) and at least a possible exit path for the cooling fluid; and a first, a second, and a third sealing assemblies (26, 27, 28) arranged in series along said path between the connecting circuit (6) and the shaft (4); and a first and a second conduits (22, 41) suitable to connect with the outside respectively a path zone comprised between the second and the third sealing assemblies (27, 28) and a path zone comprised between the first and the second sealing assemblies (26, 27).

2. Electric machine according to claim 1, comprising a first plug (23) for selectively closing the first conduit (22).

3. Electric machine according to claim 2 comprising a sensor (24) arranged at the shaft (4) outside the stator casing (3) and suitable to detect the inflammable cooling fluid in proximity of the first conduit (22).

4. Electric machine according to any one of the foregoing claims, comprising a second plug (42) for closing the second conduit (41).

5. Electric machine according to any one of the foregoing claims, wherein said plurality of holes (14, 15, 16, 17, 18) suitable to define a housing for the connecting circuit (6) define a plurality of possible exit paths of the inflammable cooling fluid; the electric machine (1) comprising a plurality of first, second and third sealing assembly (26, 27, 28) arranged so that along each possible exit path a first, a second, and a third sealing assembly (26, 27, 28) are arranged in series.

6. Electric machine according to claim 5, wherein the paths of said plurality of possible exit paths have a common section; the first conduit (22) extending into the shaft (4) from said common section to the outside of the shaft (4).

7. Electric machine according to any one of the foregoing claims, wherein each of the first, the second, and the third sealing assemblies (26, 27, 28) comprises at least a gasket (35; 39; 50) and a respective compression member (36; 40; 13) for compressing the gasket (35; 39; 50) against the shaft (4).

8. Electric machine according to claim 7, wherein each compression member (36; 40; 13) can be screwed into the shaft (4) or into the connecting circuit (6).

9. Electric machine according to any one of the foregoing claims, wherein the connecting circuit (6) comprises two rings (10) coupled to shaft (4); two first pins (11) connected respectively to rings (10) and housed in two diametric holes (15, 17); two axial bars (12) housed in an axial hole (14) and connected respectively to the first pins (11) and at least two second pin (13) each connected to the excitation electric winding (5) and to the bars (12); each first pin (11) being coupled to the first and to the second sealing assemblies (26, 27) at each end of the first pin (11); and each second pin (13) being coupled to a third sealing member (28).

10. Electric machine according to claim 9, wherein the second conduit (41) extends into the first pin (11) for connecting a zone between the first and the second sealing assemblies (26, 27) to the outside of the first pin (11).

## Patentansprüche

1. Eine mit einem entflammbaren Fluid gekühlte Elektromaschine; wobei die Elektromaschine (1) folgendes umfasst: einen Rotor (2), der um eine Achse (A1) rotieren kann und ein Statorgehäuse (3), das zum Teil um den Rotor (2) herum angeordnet und geeignet ist, einen Raum (9) zu definieren, der durch das Kühlfluid belegt ist, wobei der Rotor (2) eine Welle (4) umfasst; mindestens eine in dem Raum (9) angeordnete elektrische Erregerwicklung (5); einen Verbindungskreislauf (6), der zumindest teilweise in die Welle (4) in von der Welle (4) elektrisch isolierender Art hinein reicht und dafür ausgelegt ist, die elektrische Erregerwicklung (5) mit der Außenseite des Statorgehäuses (3) zu verbinden; wobei die Welle (4) eine Vielzahl an Löchern (14, 15, 16, 17, 18), die dafür ausgelegt sind, ein Gehäuse für den Verbindungskreislauf (6) und mindestens einen möglichen Austrittsweg für das Kühlfluid zu bestimmen, eine erste, eine zweite und eine dritte Dichtungsbaugruppe (26, 27, 28), die hintereinander entlang des besagten Weges zwischen dem Verbindungskreislauf (6) und der Welle (4) angeordnet sind; und eine erste und eine zweite Leitung (22, 41) umfasst, die dafür ausgelegt sind, eine Verbindung mit der Außenseite für jeweils einen zwischen der zweiten und der dritten Dichtungsbaugruppen (27, 28) bestehenden Wegbereich und einen zwischen der ersten und der zweiten Dichtungsbaugruppen (26, 27) bestehenden Wegbereich herzustellen.

2. Eine Elektromaschine nach Anspruch 1, umfassend einen ersten Stöpsel (23) zum selektiven Schließen der ersten Leitung (22).

3. Eine Elektromaschine nach Anspruch 2, umfassend einen Sensor (24), der an der Welle (4) außerhalb des Statorgehäuses (3) angeordnet und dafür ausgelegt ist, das entflammbare Kühlfluid in der Nähe der ersten Leitung (22) zu erkennen.

4. Eine Elektromaschine nach einem der vorhergehenden Ansprüche, umfassend einen zweiten Stöpsel (42) zum Schließen der zweiten Leitung (41).

5. Eine Elektromaschine nach einem der vorhergehenden Ansprüche, worin die für das Bilden eines Gehäuses für den Verbindungskreislauf (6) geeignete Vielzahl an Löchern (14, 15, 16, 17, 18) eine Vielzahl an möglichen Austrittswegen für das entflammbare Kühlfluid definiert, wobei die Elektromaschine (1) eine Vielzahl an ersten, zweiten und dritten Dichtungsbaugruppen (26, 27, 28) umfasst, die so angeordnet sind, dass entlang eines jeden möglichen Austrittsweges eine erste, zweite und dritte Dichtungsbaugruppe (26, 27, 28) hintereinander angeordnet sind.

6. Eine Elektromaschine nach Anspruch 5, worin die Wege der Vielzahl an möglichen Austrittswegen über einen gemeinsamen Abschnitt verfügen, wobei sich die erste Leitung (22) von dem gemeinsamen Abschnitt zu der Außenseite der Welle (4) in die Welle (4) hinein erstreckt.

7. Eine Elektromaschine nach einem der vorhergehenden Ansprüche, worin jede der ersten, zweiten und dritten Dichtungsbaugruppen (26, 27, 28) mindestens eine Dichtung (35, 39, 50) und ein zugehöriges Kompressionsteil (36, 40, 13), zum Pressen der Dichtung (35, 39, 50) gegen die Welle (4) umfasst.

8. Eine Elektromaschine nach Anspruch 7, worin jedes Kompressionsteil (36, 40, 13) in die Welle (4) oder in den Verbindungskreislauf (6) geschraubt werden kann.

9. Eine Elektromaschine nach einem der vorhergehenden Ansprüche, worin der Verbindungskreislauf (6) folgendes umfasst: zwei an die Welle (4) gekoppelte Ringe (10); zwei erste Stifte (11), die jeweils mit den Ringen (10) verbunden und in zwei diametrische Löcher (15, 17) angeordnet sind; zwei axiale Stangen (12), die in einem axial angebrachten Loch (14) angeordnet und jeweils mit den ersten Stiften (11) und mit mindestens zwei zweiten Stiften (13) verbunden sind, von denen jeder mit der elektrischen Erregerwicklung (5) und den Stangen (12) verbunden ist; wobei jeder der ersten Stifte (11) jeweils an jedem Ende des ersten Stiftes (11) mit der ersten und der zweiten Dichtungsbaugruppe (26, 27) gekoppelt ist; und wobei jeder zweite Stift (13) mit einem dritten Dichtungsbauteil (28) gekoppelt ist.

10. Eine Elektromaschine nach Anspruch 9, worin die zweite Leitung (41) in den ersten Stift (11) hinein reicht, um eine Zone zwischen der ersten und der zweiten Dichtungsbaugruppen (26, 27) mit der Außenseite des ersten Stiftes (11) zu verbinden.

## Revendications

1. Machine électrique refroidie avec un fluide de refroidissement inflammable, la machine électrique (1) comprenant un rotor (2) pouvant tourner autour d'un axe (A1) ; et un boîtier de stator (3) disposé, en partie, autour du rotor (2) et adapté pour définir un espace (9) occupé par le fluide de refroidissement ; le rotor (2) comprenant un arbre (4) ; au moins un enroulement électrique d'excitation (5) disposé dans l'espace (9) ; un circuit de connexion (6) s'étendant, au moins en partie, à l'intérieur de l'arbre (4) d'une manière électriquement isolée de l'arbre (4) et adapté pour connecter l'enroulement électrique d'excitation (5) avec l'extérieur du boîtier de stator (3) ; ledit arbre (4) comprenant une pluralité de trous (14, 15, 16, 17, 18) adaptés pour définir un logement pour le circuit de connexion (6) et au moins un chemin de sortie possible pour le fluide de refroidissement ; et un premier, un deuxième et un troisième ensembles d'étanchéité (26, 27, 28) disposés en série le long dudit chemin entre le circuit de connexion (6) et l'arbre (4) ; et un premier et un deuxième conduits (22, 41) adaptés pour être connectés avec l'extérieur respectivement une zone de chemin comprise entre le deuxième et le troisième ensembles d'étanchéité (27, 28) et une zone de chemin comprise entre le premier et le deuxième ensembles d'étanchéité (26, 27).

2. Machine électrique selon la revendication 1, comprenant un premier bouchon (23) pour fermer sélectivement le premier conduit (22).

3. Machine électrique selon la revendication 2, comprenant un capteur (24) disposé au niveau de l'arbre (4) à l'extérieur du boîtier de stator (3) et adapté pour détecter le fluide de refroidissement inflammable à proximité du premier conduit (22).

4. Machine électrique selon l'une quelconque des revendications précédentes, comprenant un deuxième bouchon (42) pour fermer le deuxième conduit (41).

5. Machine électrique selon l'une quelconque des revendications précédentes, dans laquelle ladite pluralité de trous (14, 15, 16, 17, 18) adaptés pour définir un logement pour le circuit de connexion (6) définissent une pluralité de chemins de sortie possibles du fluide de refroidissement inflammable ; la machine électrique (1) comprenant une pluralité de premiers, de deuxièmes et de troisièmes ensembles d'étanchéité (26, 27, 28) disposés de telle manière que le long de chaque chemin de sortie possible, un premier, un deuxième et un troisième ensembles d'étanchéité (26, 27, 28) sont disposés en série.

6. Machine électrique selon la revendication 5, dans laquelle les chemins de ladite pluralité de chemins de sortie possibles ont une section commune ; le premier conduit (22) s'étendant à l'intérieur de l'arbre (4) depuis ladite section commune jusqu'à l'extérieur de l'arbre (4).

7. Machine électrique selon l'une quelconque des revendications précédentes, dans laquelle chacun des premier, deuxième et troisième ensembles d'étanchéité (26, 27, 28) comprend au moins un joint (35 ; 39 ; 50) et un élément de compression (36 ; 40 ; 13) respectif pour compresser le joint (35 ; 39 ; 50) contre l'arbre (4).

8. Machine électrique selon la revendication 7, dans laquelle chaque élément de compression (36 ; 40 ; 13) peut être vissé à l'intérieur de l'arbre (4) ou à l'intérieur du circuit de connexion (6).

9. Machine électrique selon l'une quelconque des revendications précédentes, dans laquelle le circuit de connexion (6) comprend deux bagues (10) couplées à l'arbre (4) ; deux premières broches (11) connectées respectivement à des bagues (10) et logées dans des trous diamétraux (15, 17) ; deux barres axiales (12) logées dans un trou axial (14) et connectées respectivement aux premières broches (11) et au moins deux deuxièmes broches (13) connectées chacune à l'enroulement électrique d'excitation (5) et aux barres (12), chaque première broche (11) étant couplée au premier et au deuxième ensembles d'étanchéité (26, 27) au niveau de chaque extrémité de la première broche (11) ; et chaque deuxième broche (13) étant couplée au troisième élément d'étanchéité (28).

10. Machine électrique selon la revendication 9, dans laquelle le deuxième conduit (41) s'étend à l'intérieur de la première broche (11) pour connecter une zone entre le premier et le deuxième ensembles d'étanchéité (26, 27) à l'extérieur de la première broche (11).
